# EUROPÄISCHE PATENTSCHRIFT

(11) **EP 3 800 001 B1**
(45) Veröffentlichungstag und Bekanntmachung des Hinweises auf die Patenterteilung: **04.09.2024**
(21) Anmeldenummer: 20184982.5
(22) Anmeldetag: 09.07.2020
(51) Int. Cl.: B23K 26/082, B23K 26/12, B23K 26/142, B23K 26/352, B23K 26/08, B23K 101/04, B23K 101/00

(54) **VORRICHTUNG ZUR LASER-STRUKTURIERUNG EINER OBERFLÄCHE EINER DURCHGANGSÖFFNUNG IN EINEM BAUTEIL**
DEVICE FOR LASER STRUCTURING OF A SURFACE OF A THROUGH-HOLE IN A COMPONENT
DISPOSITIF DE STRUCTURATION LASER D'UNE SURFACE D'UNE OUVERTURE DE PASSAGE DANS UN COMPOSANT

(30) Priorität: 18.07.2019 DE 102019119466
(43) Veröffentlichungstag der Anmeldung: 07.04.2021
(73) Patentinhaber: Volkswagen Aktiengesellschaft, 38440 Wolfsburg (DE); Laser Zentrum Hannover e.V., 30419 Hannover (DE)
(72) Erfinder: RICHTER, Stefan, 38531 Rötgesbüttel (DE); WÖHLE, Joachim, 30916 Isernhagen (DE); HIRSCHFELDT, Mike, 38124 Braunschweig (DE); LAMMERS, Marius, 31137 Hildesheim (DE); HERMSDORF, Jörg, 30916 Isernhagen (DE)
(74) Vertreter: Bungartz, Florian

(56) Entgegenhaltungen:
- EP-A2- 2 799 180
- WO-A1-2005/053896
- DE-A1- 102016 103 578
- DE-A1- 102017 108 269
- JP-A- 2016 068 138

## Beschreibung

Die Erfindung betrifft eine Kombination einer Vorrichtung zur Laser-Strukturierung einer Oberfläche einer Durchgangsöffnung in einem Bauteil und eines mittels dieser Vorrichtung zu strukturierenden Bauteils, wobei es sich bei dem Bauteil um ein Zylinderkurbelgehäuse für einen Hubkolben-Verbrennungsmotor handelt und bei der Durchgangsöffnung insbesondere um eine Zylinderöffnung des Zylinderkurbelgehäuses beziehungsweise des Verbrennungsmotors handeln kann.

Insbesondere bei Hubkolben-Verbrennungsmotoren, nachfolgend verkürzt als Verbrennungsmotoren bezeichnet, bei denen die Zylinderkurbelgehäuse aus Leichtmetallen bestehen, werden zumindest diejenigen Abschnitte der Ober- beziehungsweise Wandflächen der in den Zylinderkurbelgehäusen ausgebildeten Zylinderöffnungen, in denen die zyklischlineare Bewegung der darin jeweils aufgenommenen Kolben erfolgt, mit Zylinderlaufbahnen aus von den Werkstoffen der Zylinderkurbelgehäuse abweichenden Werkstoffen versehen, um insbesondere die Verschleißbeständigkeit zu erhöhen und einen möglichst geringen Reibungswiderstand zu realisieren. Verbreitet ist die Integration von in sich formstabilen Zylinderlaufbuchsen, beispielsweise aus Grauguss, in Zylinderkurbelgehäuse, wobei die Zylinderlaufbuchsen beispielsweise beim Gießen der Zylinderkurbelgehäuse umgossen werden können. Ebenfalls verbreitet ist eine zumindest teilweise Beschichtung der Oberflächen der in Zylinderkurbelgehäusen ausgebildeten Zylinderöffnungen, beispielsweise durch ein thermisches Spritzen, d.h. durch ein Aufspritzen eines geschmolzenen, üblicherweise metallischen Werkstoffs auf die Oberflächen der Zylinderöffnungen, wobei die dabei erzeugten Beschichtungsschichten nach der Aushärtung der Beschichtungswerkstoffe die Zylinderlaufflächen der Zylinderöffnungen ausbilden.

Bei einem solchen Beschichten von Oberflächen der Zylinderöffnungen von Zylinderkurbelgehäusen muss eine ausreichende Haftung der Beschichtungsschichten auf den Oberflächen der Zylinderöffnungen gewährleistet werden. Hierfür ist vielfach ein Aufrauen beziehungsweise das Erzeugen von Strukturierungen der Oberflächen erforderlich, um ein stark ausgeprägtes Eingreifen der Werkstoffe der Beschichtungsschichten in die Werkstoffe der Zylinderkurbelgehäuse zu erreichen.

Ein solches Strukturieren von Oberflächen von Zylinderöffnungen von Zylinderkurbelgehäusen kann beispielsweise durch ein Bestrahlen mit feinkörnigen Festkörpern (Partikeln) erfolgen. Alternativ ist auch ein Strukturieren mittels Laserstrahlung bekannt, bei der insbesondere eine gepulst erzeugte Laserstrahlung in Richtung einer zu strukturierenden Oberfläche ausgestrahlt und dabei entlang dieser Oberfläche verfahren wird. Die auf die Oberfläche auftreffende Laserstrahlung verdampft den dortigen Werkstoff und bildet dadurch Vertiefungen aus, die in Kombination miteinander die auszubildende Strukturierung der Oberfläche darstellen.

Ein solches Verfahren und eine dabei eingesetzte Vorrichtung ist beispielsweise aus der EP 2 799 180 A2 bekannt. Die darin beschriebene Vorrichtung umfasst eine rohrförmige Lanze, die in axialer Richtung, d.h. entlang ihrer Längsachse, in die Zylinderöffnung verfahrbar und zudem drehbar um ihre Längsachse antreibbar ist. An ihrem unteren d.h. in die Zylinderöffnung eintauchenden Ende bildet die Lanze eine Durchtrittsöffnung aus, aus der Laserstrahlung in exakt radialer Richtung austreten und dadurch in senkrechter Richtung auf die zu strukturierende Oberfläche der Zylinderöffnung auftreffen kann. Diese Laserstrahlung wird von einer Laserlichtquelle erzeugt, wobei die Laserstrahlung von der Laserlichtquelle in koaxialer Ausrichtung bezüglich der Längsachse der Lanze in diese eingeleitet und mittels eines Spiegels oder Prismas in die exakt radiale Richtung umgelenkt wird.

Bei einer Strukturierung einer Oberfläche einer Durchgangsöffnung mittels eines Lasers können insbesondere durch eine sich anschließende Kondensation des verdampften Werkstoffs noch innerhalb der Zylinderöffnung Partikel entstehen, die zu einer Verschmutzung der Oberfläche der Durchgangsöffnung und der Lanze sowie anderer Komponenten der für die Strukturierung eingesetzten Vorrichtung führen können. Dies kann, neben einem Reinigungsaufwand, langfristig zu einer Beeinträchtigung des Austritts der Laserstrahlung aus der Lanze und damit zu einer negativen Beeinflussung des Strukturierungsergebnisses führen.

Um eine solche Verschmutzung zu vermeiden oder gering zu halten, ist bei dem in der EP 2 799 180 A2 offenbarten Verfahren vorgesehen, Luft durch die Lanze oder durch den zwischen der Lanze und der Oberfläche der Zylinderöffnung ausgebildeten Ringraum strömen zu lassen. Mittels der Luftströmung werden die Partikel aus der Lanze oder der Zylinderöffnung ausgetragen.

Die DE 198 17 091 A1 beschreibt ein Verfahren zur Beschichtung von Zylinderöffnungen eines Zylinderkurbelgehäuses, bei dem Siliziumpulver mittels eines Förder- und Schutzgasstroms in die Zylinderöffnungen eingebracht und zusätzlich mittels einer Laserstrahlung ein Plasma des Siliziumpulvers erzeugt wird, wodurch dieses nach der Abkühlung und Aushärtung mit den Oberflächen der Zylinderöffnungen verbunden ist und dadurch jeweils eine Beschichtungsschicht ausbildet. Auch dort wird eine Gasströmung dazu genutzt, eine Verschmutzung der Optik, mittels der die Laserstrahlung ausgebracht wird, durch das Siliziumpulver gering zu halten.

Die DE 199 36 393 A1 offenbart ein Verfahren zum Beschichten der Oberfläche einer Zylinderöffnung eines Zylinderkurbelgehäuses mittels thermischen Spritzens, wobei ein Nebel des Beschichtungswerkstoffs an den beiden Enden der Zylinderöffnung abgesaugt wird.

Die DE 10 2016 103 578 A1 (offenbarend den Oberbegriff des Anspruchs 1) beschreibt eine Vorrichtung zur Strukturierung einer Oberfläche einer Durchgangsöffnung in einem Bauteil, die eine Vorrichtung zur Laserstrukturierung und eine Abdeckeinrichtung, die für eine Anordnung an einer Stirnseite des Bauteils ausgelegt ist, wobei die Abdeckeinrichtung eine Durchtrittsöffnung ausbildet, durch die die Lanze verfahrbar ist.

Die JP 2016-068138 A offenbart eine Vorrichtung zum Zerschneiden eines doppelwandigen, in Wasser untergetauchten Rohrs, wobei über eine Lanze Laserstrahlung gemeinsam mit einem Gasstrom seitlich aus einem Kopf der Lanze ausbringbar ist. Mittels des Gasstroms soll im Bereich der Laserstrahlung L das Wasser verdrängt werden, um eine Beeinträchtigung der Laserleistung durch das Wasser zu vermeiden. Optional kann zudem vorgesehen sein, dass ein Gas auch in den Zwischenraum zwischen den zwei Rohrwänden eingebracht wird, um diesen Zwischenraum an einer Stelle, an der das Rohr geschnitten werden soll, von Wasser zu evakuieren.

Der Erfindung lag die Aufgabe zugrunde, auf möglichst einfache und gleichzeitig effektive Weise eine Verschmutzung einer Lanze, mittels der eine Laserstrahlung auf eine Oberfläche einer Zylinderöffnung eines Zylinderkurbelgehäuses für einen Verbrennungsmotor gelenkt wird, um diese Oberfläche zu strukturieren, zu vermeiden.

Diese Aufgabe wird mittels einer Kombination gemäß dem Patentanspruch 1 gelöst. Vorteilhafte Ausgestaltungsformen der erfindungsgemäßen Kombination sind Gegenstände der weiteren Patentansprüche und/oder ergeben sich aus der nachfolgenden Beschreibung der Erfindung.

Erfindungsgemäß ist eine Kombination mit einer Vorrichtung zur Strukturierung einer Oberfläche einer Durchgangsöffnung in einem Bauteil, konkret einer Zylinderöffnung eines Zylinderkurbelgehäuses für einen (Hubkolben-)Verbrennungsmotor, vorgesehen. Die Vorrichtung umfasst zumindest eine Lanze, die mittels einer Verfahreinrichtung in die Durchgangsöffnung verfahrbar ist, wobei die Lanze Mittel zum Ausbringen einer Laserstrahlung einer Laserlichtquelle (die vorzugsweise ebenfalls Teil der Vorrichtung ist) in Richtung der Oberfläche aufweist. Vorzugsweise kann eine solche Vorrichtung weiterhin Mittel zur Rotation der Mittel zum Ausbringen relativ zu dem Bauteil aufweisen, wozu die Lanze und/oder die Mittel zum Ausbringen und/oder das Bauteil mittels einer entsprechenden Rotationseinrichtung rotierend angetrieben werden können. Weiterhin ist eine vorzugsweise plattenförmige Abdeckeinrichtung vorgesehen, die für eine Anordnung an einer (ersten) Stirnseite des Bauteils ausgelegt ist, wobei die Abdeckeinrichtung eine Durchtrittsöffnung ausbildet, die derart ausgebildet ist, dass die Lanze durch diese verfahrbar ist. Als Stirnseite des Bauteils wird dabei eine Seite angesehen, in der die Durchgangsöffnung ausgebildet bzw. die eine Mündungsöffnung der Durchgangsöffnung aufweist. Gekennzeichnet ist eine solche Vorrichtung weiterhin durch die Integration einer Druckgasführung in die Abdeckeinrichtung, wobei die Druckgasführung Mittel zum Anschließen an eine Druckgasquelle (die ebenfalls Teil der Vorrichtung sein kann) umfasst und randseitig der Durchtrittsöffnung eine oder mehrere Austrittsöffnungen ausbildet.

Eine erfindungsgemäße Kombination umfasst zumindest eine solche Vorrichtung sowie ein Bauteil, das eine oder mehrere Durchgangsöffnungen umfasst, dessen/deren Oberfläche(n) mittels der Vorrichtung strukturiert werden soll(en). Konkret handelt es sich bei dem Bauteil um ein Zylinderkurbelgehäuse für einen (Hubkolben-)Verbrennungsmotor. Bei der oder den Durchgangsöffnungen kann es sich um Zylinderöffnungen, die bei der Integration des Zylinderkurbelgehäuses in den Verbrennungsmotor der Aufnahme (jeweils) eines Kolbens des Verbrennungsmotors dienen, handeln. Sofern das Bauteil einer erfindungsgemäßen Kombination eine Mehrzahl von Durchgangsöffnungen ausbildet, kann vorzugsweise vorgesehen sein, dass die Abdeckeinrichtung derart dimensioniert ist, dass die Durchtrittsöffnung in Überdeckung mit jeder der Durchgangsöffnungen bringbar ist, wobei dann die jeweils anderen Durchgangsöffnungen mittels der Abdeckeinrichtung abgedeckt sind. Dadurch kann bei dem Bearbeiten beziehungsweise Strukturieren einer der Durchgangsöffnungen eine Verschmutzung der anderen Durchgangsöffnung(en) mittels der Abdeckeinrichtung vermieden werden.

Durch die erfindungsgemäße Integration einer Druckgasführung in die Abdeckeinrichtung wird ermöglicht, Druckgas, bei dem es sich vorzugsweise um Druckluft handeln kann, in vorteilhafter Weise in die Durchgangsöffnung einzubringen, wodurch besonders gut Partikel des durch die Wirkung der Laserstrahlung aus der Oberfläche der Durchgangsöffnung herausgelösten Werkstoffs abgeführt werden können. Dadurch kann eine Verschmutzung der Durchgangsöffnung und der Lanze sowie anderer Komponenten der Vorrichtung gering gehalten werden. Insbesondere ermöglicht die erfindungsgemäße Integration der Druckgasführung in die Abdeckeinrichtung die Erzeugung einer lokal begrenzten und exakt gerichteten Druckgasströmung. Eine solche Druckgasströmung kann in vorteilhafter Weise auch dazu genutzt werden, als Primärströmung ein Ansaugen einer zusätzlichen (Sekundär-)Strömung von Gas über die Durchtrittsöffnung der Abdeckeinrichtung zu bewirken, so dass insgesamt eine relativ große Spülgasströmung für ein Austragen der Partikel aus der Durchgangsöffnung zur Verfügung steht.

Die Mittel zum Ausbringen der Laserstrahlung können insbesondere einen für die Laserstrahlung durchlässigen Austrittsbereich der Lanze, der insbesondere von einer Mantelöffnung oder einem Austrittsfenster der Lanze ausgebildet sein kann, umfassen. Weiterhin können diese Mittel eine Umlenkeinrichtung für die Laserstrahlung, die beispielsweise ein Prisma und/oder einen Spiegel aufweist, umfassen. Diese Umlenkeinrichtung kann dafür vorgesehen sein, die von der Laserlichtquelle erzeugte Laserstrahlung, der vorzugsweise koaxial bezüglich der Längsachse der Lanze in diese eingeleitet werden kann, umzulenken und dadurch auf die zu strukturierende Oberfläche der Durchgangsöffnung zu richten. Grundsätzlich besteht auch die Möglichkeit, die Laserlichtquelle in die Lanze selbst zu integrieren.

Ein besonders gutes Austragen von Partikeln des durch die Wirkung der Laserstrahlung aus der Oberfläche der Durchgangsöffnung herausgelösten Werkstoffs kann realisiert werden, wenn, wie dies vorzugsweise vorgesehen ist, die Austrittsöffnung der Abdeckeinrichtung geschlossen ringförmig ausgebildet ist. Dadurch kann eine entlang des gesamten Umfangs der Oberfläche der Durchgangsöffnung möglichst gleichmäßige Druckgasströmung erzeugt werden.

Gemäß einer weiterhin bevorzugten Ausgestaltungsform der Vorrichtung einer erfindungsgemäßen Kombination kann vorgesehen sein, dass die Austrittsöffnung(en) dafür ausgelegt ist/sind, (jeweils) eine Druckgasströmung zu erzeugen, die radial, insbesondere exakt radial (d.h. senkrecht) bezüglich der Längsachse der Durchtrittsöffnung der Abdeckeinrichtung ausgerichtet ist. Alternativ kann auch eine Druckgasströmung vorteilhaft sein, die parallel bezüglich der Längsachse der Durchtrittsöffnung ausgerichtet ist und dabei in Richtung einer Seite der Abdeckeinrichtung weist, die dafür vorgesehen ist, an das Bauteil anzugrenzen.

Eine konstruktiv besonders einfache und damit vorteilhafte Ausgestaltung für die Vorrichtung einer erfindungsgemäßen Kombination kann realisiert werden, wenn die Abdeckeinrichtung einen Grundkörper und einen Deckelteil umfasst, die in Kombination miteinander die Durchtrittsöffnung ausbilden beziehungsweise begrenzen, wobei ein Spalt oder mehrere Spalte, der/die zwischen dem Grundkörper und dem Deckelteil gelegen ist/sind, die Austrittsöffnung(en) ausbilden.

Gemäß einer bevorzugten Ausgestaltungsform der Vorrichtung einer erfindungsgemäßen Kombination kann vorgesehen sein, dass die Kante der Durchtrittsöffnung, die auf der von dem Bauteil abgewandten Seite der Abdeckeinrichtung gelegen ist, abgerundet ausgebildet ist. Dadurch kann insbesondere ein vorteilhaftes Einströmen einer durch die Druckgasströmung angesaugten Sekundärströmung von Gas in die Durchgangsöffnung realisiert werden, wobei die Abrundung der Kante der Durchtrittsöffnung insbesondere Verwirbelungen dieser Sekundärströmung vermeiden beziehungsweise gering halten kann.

Als vorteilhafte Ergänzung zur Realisierung einer möglichst vorteilhaften Durchströmung der Durchgangsöffnung des Bauteils mittels der Druckgasströmung und gegebenenfalls auch mittels der von dieser angesaugten Sekundärströmung kann zudem eine Absaugeinrichtung zur Absaugung von Gas aus der Durchgangsöffnung vorgesehen sein, wobei die Absaugeinrichtung für eine Anordnung an der anderen (zweiten) Stirnseite des Bauteils (d.h. an derjenigen der zwei Stirnseiten, die nicht für eine Anordnung der Abdeckeinrichtung vorgesehen ist) ausgelegt ist.

Gemäß einer ebenfalls bevorzugten Ausgestaltungsform der Vorrichtung einer erfindungsgemäßen Kombination kann vorgesehen sein, dass die Lanze derart ausgebildet ist, dass die Laserstrahlung in einem mit der Längsachse der Lanze eingeschlossenen Winkel, der von 90° abweicht und vorzugsweise größer als 45° (beispielsweise 60°) ist, ausbringbar ist. Dadurch können durch die Wirkung der Laserstrahlung Vertiefungen in die Oberfläche der Durchgangsöffnung eingebracht werden, die bezüglich der Senkrechten zu dieser Oberfläche Hinterschnitte ausbilden, wodurch eine besonders gute Haftung einer anschließend auf die so strukturierte Oberfläche aufgebrachten Beschichtungsschicht realisiert werden kann.

Die Laserstrahlung kann aufgrund des mit der Längsachse der Lanze eingeschlossenen, von 90° abweichenden Winkels in vorteilhafter Weise eine Ausrichtung in Vorschubrichtung der Lanze (d.h. in derjenigen Richtung, in der diese über die Durchtrittsöffnung der Abdeckeinrichtung in die Durchgangsöffnung eingebracht werden kann) aufweisen. Insbesondere bei einer solchen Ausrichtung der Laserstrahlung kann realisiert werden, dass auch ein Abschnitt der (ersten) Stirnseite des Bauteils, an der die Abdeckeinrichtung angeordnet ist, strukturiert wird, was sich ebenfalls vorteilhaft auf die Verbindung zwischen dem Bauteil und einer nachträglich aufgebrachten Beschichtungsschicht auswirken kann. Um eine solche Strukturierung eines Abschnitts dieser Stirnseite des Bauteils zu ermöglichen, kann vorzugsweise auch vorgesehen sein, dass die Abmessung(en) der Durchtrittsöffnung (insbesondere der Durchmesser der vorzugsweise kreisförmigen Durchtrittsöffnung) der Abdeckeinrichtung in zumindest einem Abschnitt größer als die Abmessung(en) des/der Durchgangsöffnungen (insbesondere der Durchmesser der vorzugsweise zylindrischen Durchgangsöffnung(en)) des Bauteils ist/sind. Dabei kann einerseits vorgesehen sein, dass die Durchtrittsöffnung über ihre gesamte Länge (ggf. mit Ausnahme des abgerundeten Abschnitts) größere Abmessungen als die Durchgangsöffnung(en) aufweist. Bevorzugt ist jedoch vorgesehen, dass die Durchtrittsöffnung lediglich in einem Abschnitt mit größeren Abmessungen ausgebildet ist, der sich an diejenige Seite der Abdeckeinrichtung anschließt, die zur Anlage an dem Bauteil vorgesehen ist. In einem anderen Abschnitt der Durchtrittsöffnung können die Abmessungen dagegen vorzugsweise kleiner als oder gleichgroß wie diejenigen der Durchgangsöffnung(en) des Bauteils gewählt sein. Dadurch wird vermieden, dass die durch die Durchtrittsöffnung der Abdeckvorrichtung in die oder eine der Durchgangsöffnungen des Bauteils übertretende Gasströmung beim Überströmen der Kante der Durchgangsöffnung gestört wird, woraus Verwirbelungen in dieser Gasströmung resultieren könnten.

Bei einer solchen Ausgestaltung einer Abdeckeinrichtung stellt der Abschnitt der Durchtrittsöffnung mit vergrößerten Abmessungen einen Hinterschnitt dar, der die Gasströmung zumindest geringfügig negativ beeinflussen kann. Es kann daher vorteilhaft sein, diesen Abschnitt möglichst kurz (bezüglich der Längsrichtung der Durchtrittsöffnung) auszubilden. Um dann dennoch in vorteilhafter Weise eine Strukturierung eines Abschnitts der an der Abdeckvorrichtung anliegenden Stirnseite des Bauteils zu ermöglichen kann es vorteilhaft sein, wenn die Durchtrittsöffnung in dem Abschnitt mit vergrößerten Abmessungen zumindest abschnittsweise derart ausgebildet ist, dass sich diese in Richtung des Bauteils bzw. in Richtung der zur Anlage an dem Bauteil vorgesehenen Seite aufweitet, insbesondere konisch aufweitet. Dabei kann besonders bevorzugt vorgesehen sein, dass der Konuswinkel zumindest in etwa (d.h. ± 5° oder ±3°) dem Winkel entspricht, mit dem die Laserstrahlung (in einem mit der Längsachse der Lanze eingeschlossenen Winkel, der von 90° abweicht) aus der Lanze ausbringbar ist.

Als "Längsachse" eines Körpers oder eines Hohlraums, der eine ringförmig, insbesondere kreisringförmig umlaufende Wandfläche aufweist, wird die die geometrischen Schwerpunkte der verschiedenen Querschnitte dieser Wandfläche verbindende Achse verstanden. Bei anders geformten Körpern oder Hohlräumen stellt die Längsachse diejenige Achse dar, die sich entlang der größten Ausdehnung des jeweiligen Körpers/Hohlraums erstreckt und dabei die geometrischen Schwerpunkte der verschiedenen Querschnitte entlang dieser Erstreckung verbindet.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in den Zeichnungen dargestellten Ausgestaltungsbeispiels näher erläutert. In den Zeichnungen zeigt, jeweils in vereinfachter Darstellung:
- Fig. 1:: schematisch die Verwendung einer Vorrichtung zur Strukturierung einer Oberfläche einer Durchgangsöffnung eines Bauteils einer erfindungsgemäßen Kombination gemäß einer ersten Ausgestaltungsform;
- Fig. 2:: in einem Längsschnitt ein Düseneinsatz für eine Abdeckeinrichtung einer Vorrichtung gemäß der ersten Ausgestaltungsform;
- Fig. 3:: schematisch die Verwendung einer Vorrichtung zur Strukturierung einer Oberfläche einer Durchgangsöffnung eines Bauteils einer erfindungsgemäßen Kombination gemäß einer zweiten Ausgestaltungsform;
- Fig. 4:: in einem Längsschnitt ein Düseneinsatz für eine Abdeckeinrichtung einer Vorrichtung gemäß der zweiten Ausgestaltungsform;
- Fig. 5:: in einer perspektivischen Darstellung eine Abdeckeinrichtung einer Vorrichtung einer erfindungsgemäßen Kombination;
- Fig. 6:: in einer perspektivischen Darstellung ein Düseneinsatz für eine Abdeckeinrichtung einer Vorrichtung einer erfindungsgemäßen Kombination gemäß einer dritten Ausgestaltungsform; und
- Fig. 7:: der Düseneinsatz gemäß der Fig. 6 in einem Längsschnitt.

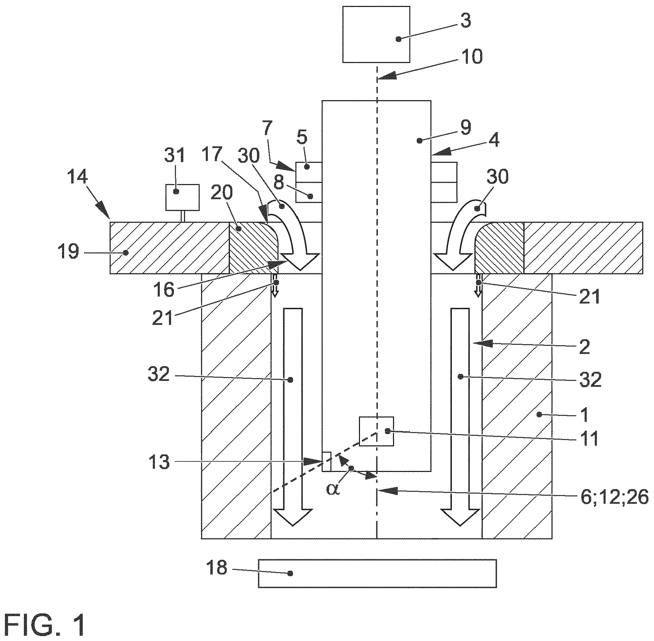

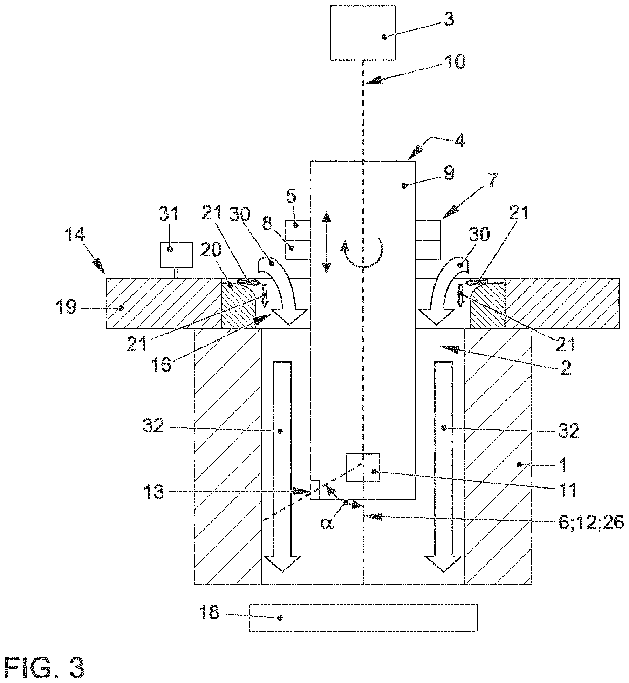

Eine Vorrichtung zur Strukturierung einer Oberfläche einer Durchgangsöffnung 2 eines Bauteil 1, bei dem es sich um ein Zylinderkurbelgehäuse 1 eines Verbrennungsmotors handelt, in dem mehrere, beispielsweise in Reihe angeordnete Zylinderöffnungen 2 ausgebildet sind, umfasst gemäß den Fig. 1 und 3 eine Laserlichtquelle 3 sowie eine Lanze 4, die mittels einer Verfahreinrichtung 5 axial, d.h. entlang der Längsachse 6 der Lanze 4, in die Durchgangsöffnung 2 des Bauteils 1 verfahrbar ist. Die Verfahreinrichtung 5 ist Bestandteil einer Antriebseinrichtung 7, die neben der Verfahreinrichtung 5 noch eine Rotationseinrichtung 8 umfasst, mittels der die Lanze 4 drehbar um deren Längsachse 6 antreibbar ist.

Die Lanze 4 umfasst einen rohrförmigen Mantel 9 mit beispielsweise kreisringförmigen Querschnittsflächen, wobei das von dem Mantel 9 eingeschlossene Innenvolumen vorzugsweise mit Luft oder einem anderen Gas gefüllt ist. Möglich ist aber auch eine andersartige Füllung des Innenvolumens mit beispielsweise einem Feststoff, solange eine Durchlässigkeit für eine von der Laserlichtquelle 3 erzeugte Laserstrahlung 10 gewährleistet ist.

Die von der Laserlichtquelle 3 erzeugte Laserstrahlung 10 wird in einer Richtung, die koaxial bezüglich der Längsachse 6 der Lanze 4 ausgerichtet ist, in ein einlassseitiges, in den Fig. 1 und 3 oberes Ende der Lanze 4 eingeleitet und trifft in der Nähe eines auslassseitigen, in den Fig. 1 und 3 unteren Endes der Lanze 4, dessen dortige Stirnseite geschlossen ausgebildet ist, auf eine in dem Innenvolumen der Lanze unbeweglich aufgenommene (und in den Fig. 1 und 3 nur schematisch dargestellte) Umlenkeinrichtung 11, beispielsweise in Form eines Prismas oder eines Spiegels . Durch die Umlenkeinrichtung 11 wird die Laserstrahlung 10 von der zuvor axialen Ausrichtung in eine radiale Ausrichtung bezüglich der Längsachse 6 der Lanze 4 und damit auch zu der dazu koaxialen Längsachse 12 der Durchgangsöffnung 2 umgelenkt, wobei vorgesehen ist, dass die Laserstrahlung 10 dabei um einen Winkel α von 60°, den die Laserstrahlung 10 mit der Längsachse 6 der Lanze 4 einschließt, umgelenkt wird. Die umgelenkte Laserstrahlung 10 verlässt die Lanze 4 durch einen in den Mantel 9 integrierten Auslass 13, der beispielsweise in Form einer Auslassöffnung oder eines für die Laserstrahlung 10 durchlässigen Auslassfensters ausgebildet sein kann, und trifft auf einen kleinen Abschnitt der Oberfläche der Durchgangsöffnung 2 des Bauteils. Die Laserstrahlung 10 führt in diesem Abschnitt zu einem Verdampfen des dortigen oberflächennahen Werkstoffs, aus dem das Bauteil 1 ausgebildet ist, wodurch sich eine Vertiefung in der Oberfläche ausbildet. Durch die Kombination des rotierenden Antriebs und des axialen Verfahrens der Lanze 4, aus dem sich eine sich ändernde Eintauchtiefe der Lanze 4 in der Durchgangsöffnung 2 des Bauteils 1 ergibt, kann mittels der Laserstrahlung 10 die gesamte Oberfläche oder auch nur ein definierter Längsabschnitt davon entsprechend bearbeitet werden, so dass die Vielzahl der mittels der Laserstrahlung 10 eingebrachten Vertiefungen eine Strukturierung dieser Oberfläche darstellen.

Der durch die Wirkung der Laserstrahlung 10 verdampfte Werkstoff des Bauteils 1 kann noch innerhalb der Durchgangsöffnung 2 zu kleinen Partikeln kondensieren. Um zu vermeiden, dass diese Partikel die Oberfläche der Durchgangsöffnung 2, die Lanze 4, davon insbesondere den Auslass 13 und, bei einer Ausgestaltung des Auslasses 13 als Auslassöffnung, die Umlenkeinrichtung 11, sowie einer Abdeckeinrichtung 14 der Vorrichtung verschmutzen, wird eine Spülgas- und konkret Spülluftströmung 32 erzeugt, die den außenseitig der Lanze 4 verbleibenden Ringspalt der Durchgangsöffnung 2 in axialer Richtung, d.h. entlang der Längsachse 12 der Durchgangsöffnung 2, durchströmt und dadurch die Partikel über diejenige (zweite) Stirnseite des Bauteils 1, die von der Laserlichtquelle 3 beabstandet ist, abführt.

Die Spülgasströmung 32 wird erzeugt, indem einerseits Druckgas 21, das aus einer Druckgasquelle 31 stammt, über eine ringförmige Austrittsöffnung 15, die randseitig einer Durchtrittsöffnung 16 der Abdeckeinrichtung 14 integriert ist und die Teil einer Druckgasführung der Abdeckeinrichtung 14 ist, in das der Laserlichtquelle 3 zugewandte Ende der Durchgangsöffnung 2 des Bauteils 1 beziehungsweise in den verbliebenen Ringspalt davon eingeleitet wird. Diese Druckgasströmung 21 bewirkt einen Sog, der dafür sorgt, dass weiteres Gas 30 (vorzugsweise Luft) aus der Umgebung über die Durchtrittsöffnung 16 der Abdeckeinrichtung 14 in die Durchgangsöffnung 2 des Bauteils 1 gesaugt wird. Dabei sorgt eine abgerundete Ausgestaltung derjenigen Kante 17 der Durchtrittsöffnung 16, die bezüglich des Bauteils 1 abgewandt gelegen ist, für ein möglichst verwirbelungsfreies Einleiten dieses angesaugten Umgebungsgases 30 in die Durchgangsöffnung 2. Weiterhin wird eine ausreichend hohe Strömungsgeschwindigkeit der Spülgasströmung 32 dadurch sichergestellt, dass an dem von der Laserlichtquelle 3 abgewandten Ende der Durchgangsöffnung 2 des Bauteils 1 eine Absaugeinrichtung 18 angeordnet ist.

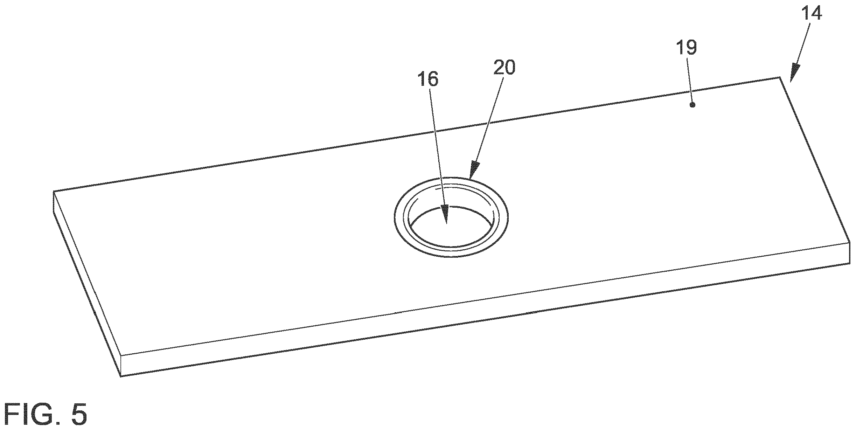

Die Abdeckeinrichtung 14 kann gemäß der Fig. 5 eine beispielsweise rechteckige Grundplatte 19 umfassen, die in zentraler Anordnung eine Aufnahmeöffnung aufweist, in die ein ringförmiger Düseneinsatz 20 eingesetzt ist, der die Durchtrittsöffnung 16, die Austrittsöffnung 15 sowie zumindest einen Teil der Druckgasführung der Abdeckeinrichtung 14 ausbildet. Die Grundplatte 19 der Abdeckeinrichtung 14 ist derart dimensioniert, dass die Durchtrittsöffnung 16 in eine koaxiale Überdeckung mit jeder der mehreren Durchgangsöffnungen 2 des Bauteils 1, insbesondere mit jeder der in Reihe angeordneten Zylinderöffnungen 2 des ein Zylinderkurbelgehäuse 1 für einen Verbrennungsmotor darstellenden Bauteils 1, gebracht werden kann, wobei dann jeweils die übrigen Durchgangsöffnungen 2 auf derjenigen Stirnseite des Bauteils 1, an das die Abdeckeinrichtung angrenzend angeordnet ist, abgedeckt sind.

Bei der Vorrichtung, wie sie in der Fig. 1 dargestellt ist, ist vorgesehen, dass die über die Austrittsöffnung 15 der Abdeckeinrichtung 14 in die Durchgangsöffnung 2 des Bauteils 1 eingebrachte, ringförmige Druckgasströmung 21 in möglichst geringer Entfernung zu der Oberfläche und beim Austritt in im Wesentlichen paralleler Ausrichtung zu der Längsachse 12 der Durchgangsöffnung 2 beziehungsweise zu der Oberfläche der Durchgangsöffnung 2 strömt.

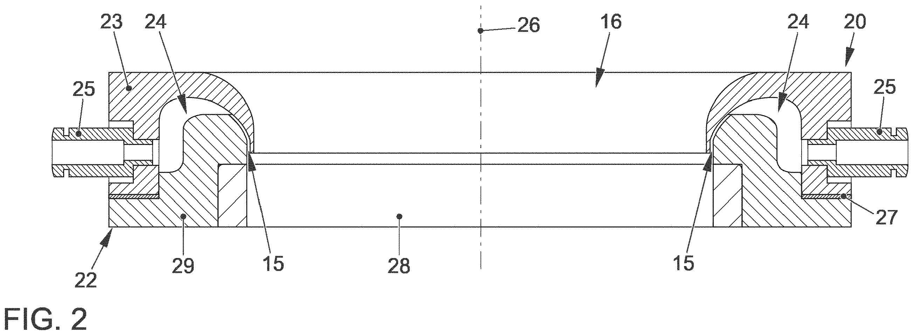

Ein dafür nutzbarer Düseneinsatz 20 der Abdeckeinrichtung 14 ist in konkretisierter Ausgestaltung in der Fig. 2 dargestellt. Demnach umfasst dieser Düseneinsatz 20 einen Grundkörper 22, auf den ein Deckelteil 23 aufgesetzt ist, wobei zwischen dem Grundkörper 22 und dem Deckelteil 23 ein geschlossen ringförmig umlaufender Strömungskanal 24 ausgebildet ist, der dazu dient, über mehrere in diesen Strömungskanal 24 mündende Druckgasanschlüsse 25 zugeführtes Druckgas 21 über den vollen Umfang der von dem Grundkörper 22 und dem Deckelteil 23 in Kombination ausgebildeten beziehungsweise begrenzten Durchtrittsöffnung 16 der Abdeckeinrichtung 14 zu verteilen. Dadurch wird eine Druckgasströmung 21 erzeugt, die über diesem Umfang möglichst gleichmäßig ist. Die Austrittsöffnung 15 des Düseneinsatzes 22 und damit der Abdeckeinrichtung 14 wird durch einen zwischen dem Grundkörper 22 und dem Deckelteil 23 liegenden, ringförmigen Spalt ausgebildet, der im Vergleich zu dem Strömungskanal 24 eine deutlich geringere Spaltbreite sowie eine parallele Ausrichtung bezüglich der Längsachse 26 der Durchtrittsöffnung 16 aufweist. Ein ringförmiges Dichtungselement 27, das zwischen exakt radial verlaufenden Kontaktflächen des Grundkörpers 22 und des Deckelteils 23 angeordnet ist, verhindert ein ungewolltes Austreten von Druckgas 21 über den zwischen diesen Kontaktflächen ausgebildeten Ringspalt.

Der Grundkörper 22 des Düseneinsatzes 20 umfasst einen Opferring 28, der austauschbar mit einem Basisteil 29 des Grundkörpers 22 verbunden ist. Dieser Opferring 28 bildet einen an die Durchgangsöffnung 2 des Bauteils 1 angrenzenden Abschnitt der Durchtrittsöffnung 15 der Abdeckeinrichtung 14 aus. Bei einer Strukturierung des Bauteils 1 kann es vorkommen, dass die Laserstrahlung 10 auch auf diesen Abschnitt der Durchtrittsöffnung 15 auftrifft, wodurch auch der Opferring 28 strukturiert wird, was einem Abtragen eines Teils des Werkstoffs, aus dem dieser ausgebildet ist, entspricht. Der Opferring 28 stellt demnach ein Verschleißteil dar, das durch die lösbare Verbindung mit dem Basisteil 29 relativ einfach und kostengünstig ausgetauscht werden kann.

Bei der Vorrichtung gemäß der Fig. 3 weist die über die Austrittsöffnung 15 der Abdeckeinrichtung 14 ausgebrachte, ringförmige Druckgasströmung 21 eine bezüglich der Längsachse 26 der Durchtrittsöffnung 16 im Wesentlichen exakt radiale Strömungsrichtung auf. Im Zusammenwirken mit der Wirkung der an dem entsprechenden anderen Ende der Durchgangsöffnung 2 des Bauteils 1 angeordneten Absaugeinrichtung 18 wird diese Druckgasströmung 21 dann in Richtung der Durchgangsöffnung 2 des Bauteils 1 umgelenkt und so zusammen mit von der Druckgasströmung 21 angesaugtem Umgebungsgas 30 in die Durchgangsöffnung 2 des Bauteils 1 eingebracht.

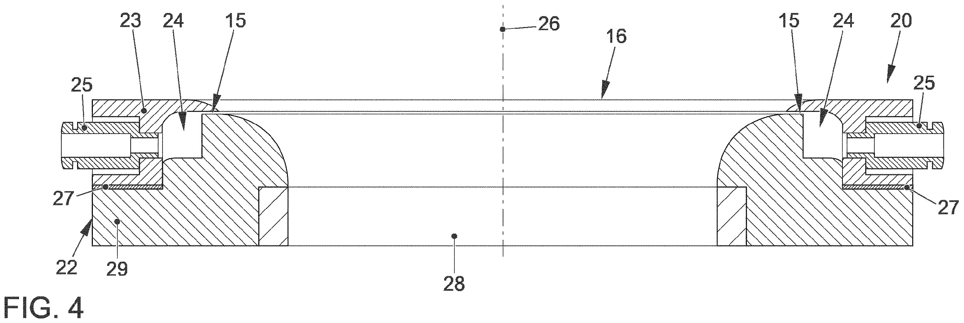

Ein für die Vorrichtung gemäß der Fig. 3 nutzbarer Düseneinsatz 20 der Abdeckeinrichtung 14 ist in konkretisierter Ausgestaltung in der Fig. 4 dargestellt. Demnach umfasst auch dieser Düseneinsatz 20 einen Grundkörper 22, auf den ein Deckelteil 23 aufgesetzt ist, wobei zwischen dem Grundkörper 22 und dem Deckelteil 23 ein geschlossen ringförmig umlaufender Strömungskanal 24 ausgebildet ist, der wiederum dazu dient, über mehrere in diesen Strömungskanal 24 mündete Druckgasanschlüsse 25 zugeführtes Druckgas über dem vollen Umfang der von dem Grundkörper 22 und dem Deckelteil 23 in Kombination miteinander begrenzten Durchtrittsöffnung 16 der Abdeckeinrichtung 14 zu verteilen, um eine Druckgasströmung 21 zu erzeugen, die über diesem Umfang möglichst gleichmäßig ist. Die Austrittsöffnung 15 des Düseneinsatzes 20 wird wiederum von einem zwischen dem Grundkörper 22 und dem Deckelteil 23 liegenden, ringförmigen Spalt ausgebildet, der im Vergleich zu dem Strömungskanal 24 eine deutlich geringere Spaltbreite sowie eine exakt radiale und damit senkrechte Ausrichtung bezüglich der Längsachse 26 der Durchtrittsöffnung 16 aufweist. Die Spaltbreite der Austrittsöffnung 15 bei dem Düseneinsatz gemäß der Fig. 4 ist auf relativ einfache Weise dadurch einstellbar, dass ein bestimmtes ringförmiges Dichtungselement 27 aus einer Mehrzahl solcher Dichtungselemente, die sich hinsichtlich ihrer Dicke unterscheiden, ausgewählt und zwischen exakt radial verlaufenden Kontaktflächen des Grundkörpers 22 und des Deckelteils 23 angeordnet wird. Dieses Dichtungselement 27 verhindert dabei auch ein ungewolltes Austreten von Druckgas 21 über den zwischen diesen Kontaktflächen ausgebildeten Ringspalt.

Bei der Vorrichtung gemäß der Fig. 3 kann ergänzend vorgesehen sein, dass der Durchmesser der kreisförmigen Durchtrittsöffnung 16 der Abdeckeinrichtung 14 größer als der (ggf. identische) Durchmesser der einzelnen Durchgangsöffnungen 2 des Bauteils 1 ist. Dadurch wird in Kombination mit der gegenüber der exakt radialen Richtung geneigten Ausrichtung der die Lanze 4 verlassenen Laserstrahlung 10 ermöglicht, dass auch ein ringförmiger Abschnitt auf der entsprechenden Stirnseite des Bauteils 1 mittels der Laserstrahlung 10 strukturiert wird.

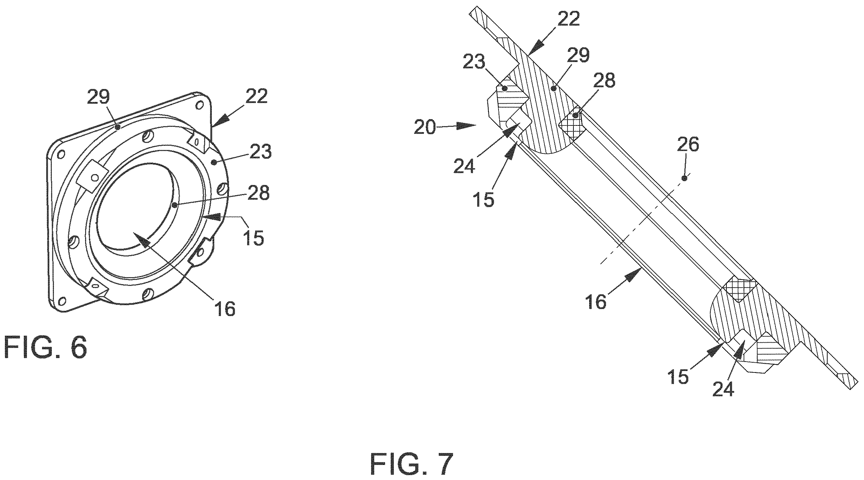

Die in den Fig. 6 und 7 dargestellte Ausgestaltungsform eines Düsenrings 20 für eine Abdeckeinrichtung entspricht funktional derjenigen gemäß der Fig. 4 und ist auch in konstruktiver Hinsicht ähnlich zur dieser ausgeführt. Demnach umfasst auch der Düseneinsatz 20 gemäß den Fig. 6 und 7 einen Grundkörper 22, auf den ein Deckelteil 23 aufgesetzt ist, wobei zwischen dem Grundkörper 22 und dem Deckelteil 23 ein geschlossen ringförmig umlaufender Strömungskanal 24 ausgebildet ist, der dazu dient, über mehrere in diesen Strömungskanal 24 mündete Druckgasanschlüsse (nicht sichtbar) zugeführtes Druckgas über dem vollen Umfang der von dem Grundkörper 22 und dem Deckelteil 23 in Kombination miteinander begrenzten Durchtrittsöffnung 16 der Abdeckeinrichtung 14 zu verteilen, um eine Druckgasströmung 21 gemäß der Fig. 3 zu erzeugen, die über diesem Umfang möglichst gleichmäßig ist. Die Austrittsöffnung 15 des Düseneinsatzes 20 ist wiederum von einem zwischen dem Grundkörper 22 und dem Deckelteil 23 liegenden, ringförmigen Spalt ausgebildet, der im Vergleich zu dem Strömungskanal 24 eine deutlich geringere Spaltbreite sowie eine exakt radiale und damit senkrechte Ausrichtung bezüglich der Längsachse 26 der Durchtrittsöffnung 16 aufweist.

Von dem Düsenring 20 gemäß der Fig. 4 unterscheidet sich derjenige gemäß den Fig. 6 und 7 insbesondere dahingehend, dass die dortige Durchtrittsöffnung 16 lediglich in einem relativ kleinen Abschnitt ihrer Längserstreckung größer als der Durchmesser der Durchgangsöffnung 2 des Bauteils 1 ist, wobei dieser Abschnitt an die Seite des Dünenrings 20 beziehungsweise der diesen umfassenden Abdeckeinrichtung 14 angrenzt, die zur Anlage an dem Bauteil 1 vorgesehen ist. In einem sich daran angrenzenden, zylindrischen Abschnitt, der in den abgerundeten Abschnitt der Durchgangsöffnung 16 übergeht, ist der Durchmesser dagegen höchstens so groß wie derjenige der Durchgangsöffnung 2. Konkret ist vorgesehen, dass sich die Durchtrittsöffnung 16 in dem Abschnitt mit vergrößertem Durchmesser in Richtung der zur Anlage an dem Bauteil 1 vorgesehenen Seite konisch aufweitet. Diese komische Aufweitung ist dabei in den Opferring 28 des Grundkörpers 22 integriert. Durch eine solche Ausgestaltung des Düsenrings 20 bleibt einerseits die Möglichkeit erhalten, einen Abschnitt der Stirnseite des Bauteils 1 mittels der Laserstrahlung 10 zu bearbeiten, wobei gleichzeitig eine möglichst vorteilhafte Gasströmung realisiert wird, weil die Gasströmung im Wesentlichen ohne Umlenkung durch die Kante der Durchgangsöffnung 2 in diese einströmen kann.

### BEZUGSZEICHENLISTE

- 1: Bauteil / Zylinderkurbelgehäuse
- 2: Durchgangsöffnung des Bauteils / Zylinderöffnung des Zylinderkurbelgehäuses
- 3: Laserlichtquelle
- 4: Lanze
- 5: Verfahreinrichtung
- 6: Längsachse der Lanze
- 7: Antriebseinrichtung
- 8: Rotationseinrichtung
- 9: Mantel der Lanze
- 10: Laserstrahlung
- 11: Umlenkeinrichtung
- 12: Längsachse der Durchgangsöffnung
- 13: Auslass der Lanze
- 14: Abdeckeinrichtung
- 15: Austrittsöffnung der Abdeckeinrichtung
- 16: Durchtrittsöffnung der Abdeckeinrichtung
- 17: Kante der Durchtrittsöffnung
- 18: Absaugeinrichtung
- 19: Grundplatte der Abdeckeinrichtung
- 20: Düseneinsatz
- 21: Druckgas(strömung)
- 22: Grundkörper des Düseneinsatzes
- 23: Deckelteil des Düseneinsatzes
- 24: Strömungskanal des Düseneinsatzes
- 25: Druckgasanschluss des Düseneinsatzes
- 26: Längsachse der Durchtrittsöffnung
- 27: Dichtungselement
- 28: Opferring des Grundkörpers
- 29: Basisteil des Grundkörpers
- 30: (Umgebungs-)Gas
- 31: Druckgasquelle
- 32: Spülgasströmung
- α: Winkel zwischen der Laserstrahlung und der Längsachse der Lanze

## Patentansprüche

1. Kombination eines Bauteils in Form eines Zylinderkurbelgehäuses für einen Verbrennungsmotor und einer Vorrichtung zur Strukturierung einer Oberfläche einer Durchgangsöffnung (2) in dem Bauteil (1), die Vorrichtung umfassend
- eine Laserlichtquelle (3), die eine Laserstrahlung (10) erzeugt, so dass eine Strukturierung einer Oberfläche einer Durchgangsöffnung in dem Bauteil (1) erzeugt wird,
- eine Lanze (4), die mittels einer Verfahreinrichtung (5) in die Durchgangsöffnung (2) verfahrbar ist, wobei die Lanze (4) Mittel zum Ausbringen der Laserstrahlung (10) der Laserlichtquelle 3 in Richtun der Oberfläche aufweist, un
**gekennzeichnet durch**:
- eine Abdeckeinrichtung (14), die für eine Anordnung an einer Stirnseite des Bauteils (1) ausgelegt ist, wobei die Abdeckeinrichtung (14) eine Durchtrittsöffnung (16) ausbildet, durch die die Lanze (4) verfahrbar ist, mit der Integration einer Druckgasführung in die Abdeckeinrichtung (14), wobei die Druckgasführung Mittel zum Anschließen an eine Druckgasquelle (31) umfasst und randseitig der Durchtrittsöffnung (16) mindestens eine Austrittsöffnung (15) ausbildet.

2. Kombination gemäß Anspruch 1, **dadurch gekennzeichnet, dass** die Austrittsöffnung (15) geschlossen ringförmig umlaufend ausgebildet ist.

3. Kombination gemäß Anspruch 1 oder 2, **dadurch gekennzeichnet, dass** die mindestens eine Austrittsöffnung (15) dafür ausgelegt ist, eine Druckgasströmung (21) zu erzeugen, die bei dem Austritt aus der Austrittsöffnung (15) radial oder parallel bezüglich der Längsachse (26) der Durchtrittsöffnung (16) ausgerichtet ist.

4. Kombination gemäß einem der vorhergehenden Ansprüche, **dadurch gekennzeichnet, dass** die mindestens eine Austrittsöffnung (15) sich erweiternd ausgebildet ist.

5. Kombination gemäß einem der vorhergehenden Ansprüche, **dadurch gekennzeichnet, dass** die Abdeckeinrichtung (14) einen Grundkörper (22) und einen Deckelteil (23) umfasst, die in Kombination miteinander die Durchtrittsöffnung (16) ausbilden, wobei die mindestens eine Austrittsöffnung (15) durch einen Spalt, der zwischen dem Grundkörper (22) und dem Deckelteil (23) gelegen ist, ausgebildet ist.

6. Kombination gemäß einem der vorhergehenden Ansprüche, **dadurch gekennzeichnet, dass** diejenige Kante (17) der Durchtrittsöffnung (16) abgerundet ausgebildet ist, die von derjenigen Seite der Abdeckeinrichtung (14), die dafür ausgelegt ist, an dem Bauteil (1) angrenzend zu liegen, abgewandt gelegen ist.

7. Kombination gemäß einem der vorhergehenden Ansprüche, **gekennzeichnet durch** eine Absaugeinrichtung (18) zur Absaugung von Gas (32) aus der Durchgangsöffnung (2), wobei die Absaugeinrichtung (18) für eine Anordnung an der anderen Stirnseite des Bauteils (1) ausgelegt ist.

8. Kombination gemäß einem der vorhergehenden Ansprüche, **gekennzeichnet durch** eine Ausgestaltung der Lanze (4) derart, dass die Laserstrahlung (10) in einem mit der Längsachse (6) der Lanze (4) eingeschlossenen Winkel (α), der von 90° abweicht, ausbringbar ist.

9. Kombination gemäß einem der vorhergehenden Ansprüche, **dadurch gekennzeichnet, dass** das Bauteil (1) eine Mehrzahl von Durchgangsöffnungen (2) ausbildet, wobei die Abdeckeinrichtung (14) derart ausgelegt ist, dass die Durchtrittsöffnung (16) der Abdeckeinrichtung (14) in Überdeckung mit jeder der Durchgangsöffnungen (2) des Bauteils (1) bringbar ist, wobei dann die jeweils anderen Durchgangsöffnungen (2) mittels der Abdeckeinrichtung (14) abgedeckt sind.

10. Kombination gemäß einem der vorhergehenden Ansprüche, **dadurch gekennzeichnet, dass** der Durchmesser der kreisförmigen Durchtrittsöffnung (16) der Abdeckeinrichtung (14) auf der zur Anlage an dem Bauteil vorgesehenen Seite größer als der oder die Durchmesser des/der zylindrischen Durchgangsöffnung(en) (2) des Bauteils (1) ist.

11. Kombination gemäß Anspruch 10, **dadurch gekennzeichnet, dass** die Durchtrittsöffnung (16) nur abschnittsweise bezüglich ihrer Längserstreckung größer als der oder die Durchmesser des/der zylindrischen Durchgangsöffnung(en) (2) des Bauteils (1) ist.

12. Kombination gemäß Anspruch 11, **dadurch gekennzeichnet, dass** die Durchtrittsöffnung (16) in dem Abschnitt mit vergrößertem Durchmesser zumindest abschnittsweise derart ausgebildet ist, dass sich diese in Richtung der zur Anlage an dem Bauteil vorgesehenen Seite aufweitet.

## Claims

1. Combination of a component in the form of a cylinder crankcase for an internal combustion engine and an apparatus for structuring a surface of a through-opening (2) in the component (1), the apparatus comprising
- a laser light source (3) which generates laser radiation (10), such that a structuring of a surface of a through-opening in the component (1) is generated,
- a lance (4) which is movable by means of a movement device (5) into the through-opening (2), wherein the lance (4) has means for emitting the laser radiation (10) of the laser light source (3) in the direction of the surface, and
**characterized by**:
- a covering device (14) which is designed for arrangement on one end side of the component (1), wherein the covering device (14) forms a passage opening (16) through which the lance (4) is movable, with the integration of a compressed-gas guide in the covering device (14), wherein the compressed-gas guide comprises means for connection to a compressed-gas source (31) and forms at least one exit opening (15) at the periphery of the passage opening (16).

2. Combination according to Claim 1, **characterized in that** the exit opening (15) runs around in encircling fashion in the form of a closed ring.

3. Combination according to Claim 1 or 2, **characterized in that** the at least one exit opening (15) is designed to generate a compressed-gas flow (21) which, when exiting from the exit opening (15), is oriented radially or parallel with respect to the longitudinal axis (26) of the passage opening (16).

4. Combination according to one of the preceding claims, **characterized in that** the at least one exit opening (15) is of widening design.

5. Combination according to one of the preceding claims, **characterized in that** the covering device (14) comprises a main body (22) and a cover part (23) which form, in combination with one another, the passage opening (16), wherein the at least one exit opening (15) is formed by a gap situated between the main body (22) and the cover part (23).

6. Combination according to one of the preceding claims, **characterized in that** that edge (17) of the passage opening (16) which is situated facing away from that side of the covering device (14) which is designed to lie adjoining the component (1) is of rounded design.

7. Combination according to one of the preceding claims, **characterized by** a suction-removal device (18) for suction removal of gas (32) from the through-opening (2), wherein the suction-removal device (18) is designed for arrangement on the other end side of the component (1).

8. Combination according to one of the preceding claims, **characterized by** the lance (4) being designed in such a way that the laser radiation (10) is able to be emitted at an angle (α), enclosed with the longitudinal axis (6) of the lance (4), which deviates from 90°.

9. Combination according to one of the preceding claims, **characterized in that** the component (1) forms a plurality of through-openings (2), wherein the covering device (14) is designed in such a way that the passage opening (16) in the covering device (14) is able to be brought into overlap with each of the through-openings (2) in the component (1), the respective other through-openings (2) then being covered by means of the covering device (14).

10. Combination according to one of the preceding claims, **characterized in that** the diameter of the circular passage opening (16) in the covering device (14) on the side provided for abutment against the component is greater than the diameter or diameters of the cylindrical through-opening(s) (2) in the component (1).

11. Combination according to Claim 10, **characterized in that** the passage opening (16) is only partially greater with respect to its longitudinal extent than the diameter or diameters of the cylindrical through-opening(s) (2) in the component (1).

12. Combination according to Claim 11, **characterized in that** the passage opening (16) in the portion with the increased diameter is at least partially formed in such a way that said passage opening widens in the direction of the side provided for abutment against the component.

## Revendications

1. Combinaison d'un composant en forme de carter de manivelle de cylindre pour moteur à combustion interne et d'un dispositif de structuration d'une surface d'une ouverture de passage (2) ménagée dans le composant (1), le dispositif comprenant
- une source de lumière laser (3) qui génère un rayonnement laser (10) de façon à générer une structuration d'une surface d'une ouverture de passage ménagée dans le composant (1),
- une lance (4) qui peut être déplacée jusque dans l'ouverture de passage (2) au moyen d'un module de déplacement (5), la lance (4) comportant des moyens d'émission du rayonnement laser (10) de la source de lumière laser (3) en direction de la surface, et
**caractérisée par** :
- un module de recouvrement (14) qui est destiné à être disposé sur une face frontale du composant (1), le module de recouvrement (14) formant une ouverture de passage (16) par laquelle la lance (4) peut être déplacée,
avec l'intégration d'un guide de gaz comprimé dans le module de recouvrement (14), le guide de gaz comprimé comprenant des moyens de raccordement à une source de gaz comprimé (31) et formant au moins une ouverture de sortie (15) sur le bord de l'ouverture de passage (16).

2. Combinaison selon la revendication 1, **caractérisée en ce que** l'ouverture de sortie (15) a une conception circonférentielle annulaire fermée.

3. Combinaison selon la revendication 1 ou 2, **caractérisée en ce que** l'au moins une ouverture de sortie (15) est conçue pour générer un flux de gaz comprimé (21) qui, en sortie de l'ouverture de sortie (15), est orienté radialement ou parallèlement à l'axe longitudinal (26) de l'ouverture de passage (16).

4. Combinaison selon l'une des revendications précédentes, **caractérisée en ce que** l'au moins une ouverture de sortie (15) est conçue de manière à s'élargir.

5. Combinaison selon l'une des revendications précédentes, **caractérisée en ce que** le module de recouvrement (14) comprend un corps de base (22) et une partie de recouvrement (23) qui, en combinaison l'un avec l'autre, forment l'ouverture de passage (16), l'au moins une ouverture de sortie (15) étant formée par un espace ménagé entre le corps de base (22) et la partie de recouvrement (23).

6. Combinaison selon l'une des revendications précédentes, **caractérisée en ce que** le bord (17) de l'ouverture de passage (16), qui est placé à l'opposé de la face du module de recouvrement (14) qui est conçue pour être adjacente au composant (1), est conçu de manière arrondie.

7. Combinaison selon l'une des revendications précédentes, **caractérisée par** un module d'aspiration (18) destiné à aspirer du gaz (32) par l'ouverture de passage (2), le dispositif d'aspiration (18) étant conçu pour être disposé sur l'autre face frontale du composant (1).

8. Combinaison selon l'une des revendications précédentes, **caractérisée par** une conception de la lance (4) qui permet d'émettre le rayonnement laser (10) suivant un angle (α) formé avec l'axe longitudinal (6) de la lance (4) et différent de 90°.

9. Combinaison selon l'une des revendications précédentes, **caractérisée en ce que** le composant (1) forme une pluralité d'ouvertures de passage (2), le module de recouvrement (14) étant conçu de manière à ce que l'ouverture de passage (16) du module de recouvrement (14) puisse être amenée à recouvrir chacune des ouvertures de passage (2) du composant (1), les autres ouvertures de passage (2) étant alors recouvertes au moyen du module de recouvrement (14).

10. Combinaison selon l'une des revendications précédentes, **caractérisée en ce que** le diamètre de l'ouverture de passage circulaire (16) du module de recouvrement (14) du côté prévu pour venir en appui sur le composant est supérieur au diamètre de chacune des ouvertures de passage cylindriques (2) du composant (1) .

11. Combinaison selon la revendication 10, **caractérisée en ce que** l'ouverture de passage (16) est supérieure au diamètre de chacune des ouvertures de passage cylindriques (2) du composant (1) seulement par portions par rapport à son extension longitudinale.

12. Combinaison selon la revendication 11, **caractérisée en ce que** l'ouverture de passage (16) dans la portion à diamètre agrandi est conçue au moins par portions de manière à s'élargir en direction du côté prévu pour venir en appui sur le composant.
